Europäisches Patentamt

(19) European Patent Office

Office européen des brevets

(11) EP 0 692 402 A2

## (12) EUROPEAN PATENT APPLICATION

(43) Date of publication:
17.01.1996 Bulletin 1996/03

(51) Int. Cl.$^6$: **B60N 2/42**, B60R 21/22

(21) Application number: 95201576.6

(22) Date of filing: 14.06.1995

(84) Designated Contracting States:
**DE ES FR GB IT**

(30) Priority: 14.07.1994 US 274892

(71) Applicant: **Top Source Technologies Incorporated**
**Palm Beach Gardens, Florida 33408-2713 (US)**

(72) Inventors:
• Singer, Neil
Armonk, New York 10504 (US)
• Derenski, Stephen J., II
Pleasantville, New York 10570 (US)

(74) Representative: **Wharton, Peter Robert**
**Bradford BD1 4SP (GB)**

(54) **Passive restraint system**

(57) A passive restraint system (10) includes a seat assembly (14) and a deployment assembly (60) for restraining the occupant (12) in a vehicle seat upon a collision. The seat assembly (14) includes a seat (20) which is nonmovable under normal operating conditions, but upon impact of a predetermined force, the seat (20) is allowed to move along a predetermined path to capture the occupant within the seat (20). At the same time, the deployment assembly (60) is utilized to provide an air bag (62) to restrain the head and upper body of the occupant and prevent the occupant from rolling over the air bag (62) upon movement with the seat (20). Such restraint assembly (10) minimizes injury caused during a front end collision by providing passive restraint of the occupant in the seat (20).

Fig. 1

**Description**

TECHNICAL FIELD

The invention relates to vehicle restraint systems for restraining an occupant in a vehicle seat upon vehicle collision, and more particularly, to a restraint system utilizing a movable seat and air bag combination.

BACKGROUND OF THE INVENTION

Typical vehicle seats generally include active restraint systems such as a seat belt to maintain the occupant in the seat upon impact. However, many of these active restraint systems are omitted in use by the occupant, and thus upon impact, severe injury may occur. It has been necessary to produce passive restraint systems which require no interaction by the occupant to ensure the protection to an occupant. Such passive restraint systems have, in the past, included shoulder harnesses, air bags, or other types of expandable devices. It has also been proposed to separately utilize a moveable seat in attempt to restrain a person within the seat during impact; however, this type of system has not been actively pursued nor practically implemented.

There are systems which utilize expandable bags for protecting the head to minimize movement thereof. Such bags are expanded and projected from behind the head of the occupant. Such systems are disclosed in Surace et al United States Patent Number 3,953,049 and Gorman United States Patent Number 3,753,576. Further examples of air bags to protect the head and lower body portions are disclosed in United States Patent Number 4,536,008, issued to Brown, Jr., 2,834,606, issued to Bertrand, 3,819,204, issued to Oaka et al, and 3,642,303, issued to Irish et al.

Passenger restraint systems incorporating movable seats are generally disclosed in United States Patent Number 3,981,520, issued to Pulling and United States Patent Number 3,695,629, issued to Schlanger. The Pulling patent relates to a moveable seat which pivots at the front end and falls downwardly at the rear end of the seat, and bag for discharge from the sides of the occupant across the occupant's upper leg and torso. The Schlanger patent relates to a movable compartment and a cushion which is disposed above the occupant during normal operation, and in front of the occupant when the compartment moves during collision.

Other various patents have been proposed for movable seats and include United States Patent Number 4,738,485, issued to Rumpf on April 19, 1988, 5,244,252, issued to Serber on September 14, 1993 and 5,022,707, issued to Beauvais et al on June 11, 1991.

However, none of these systems adequately provide the passive restraint combination necessary to minimize injury. The use of air bags alone does not restrain the occupant and prevent submarining of occupant along the seat cushion below the air bags. Furthermore, use of a movable seat alone causes the head of the user to significantly move and potentially impact the header of the vehicle without any other restraint.

SUMMARY OF THE INVENTION

The invention includes a vehicle restraint system for restraining an occupant of a vehicle in the vehicle seat upon vehicle impact. The system comprises a vehicle seat assembly adapted to be connected to a vehicle. The seat assembly includes a seat member having a back portion extending in an upward direction and a seating portion adjacent said seat portion extending in a forward, horizontal direction. Also included is connecting means for movably connecting the seat member to the vehicle so the seat member is fixed to the vehicle under normal operating conditions and is movable during impact to move in the forward direction while tilting the seating portion to a predetermined tilt position to restrain the occupant in the seat member. Also included is a deployment assembly adapted to be connected to the vehicle. The deployment assembly includes expanding means to expand during impact toward the seat assembly while the seating portion is moving to said predetermined tilt position to restrain the head of the occupant. The expandable member includes a volume expandable above the seat back of the seat member to restrain the head of the occupant and prevent the head from contacting the header of the vehicle.

The combination air bag and moveable seat increases restrain by the occupant in the seat to act as a passive restraint system.

FIGURES IN THE DRAWINGS

Other advantages of the present invention will be readily appreciated as the same becomes better understood by reference to the following detailed description when considered in connection with the accompanying drawings wherein:

Figure 1 is a schematic diagram of the vehicle restraint system in a vehicle under normal operating conditions;
Figure 2 is a graph illustrating a crash pulse for a specific vehicle;
Figure 3 is a schematic diagram of the vehicle restraint system upon impact and initial movement;

Figure 4 is a schematic view of the vehicle restraint system upon full impact;

Figures 5a-5b are graphs illustrating trajectories of the reference point;

Figures 6a-6c are graphs illustrating movement of the front and rear sides of the seat; and

Figure 7 is a schematic diagram illustrating two additional embodiments of the invention, and a prior art air bag on a fixed seat.

DETAILED DESCRIPTION OF THE PREFERRED EMBODIMENT

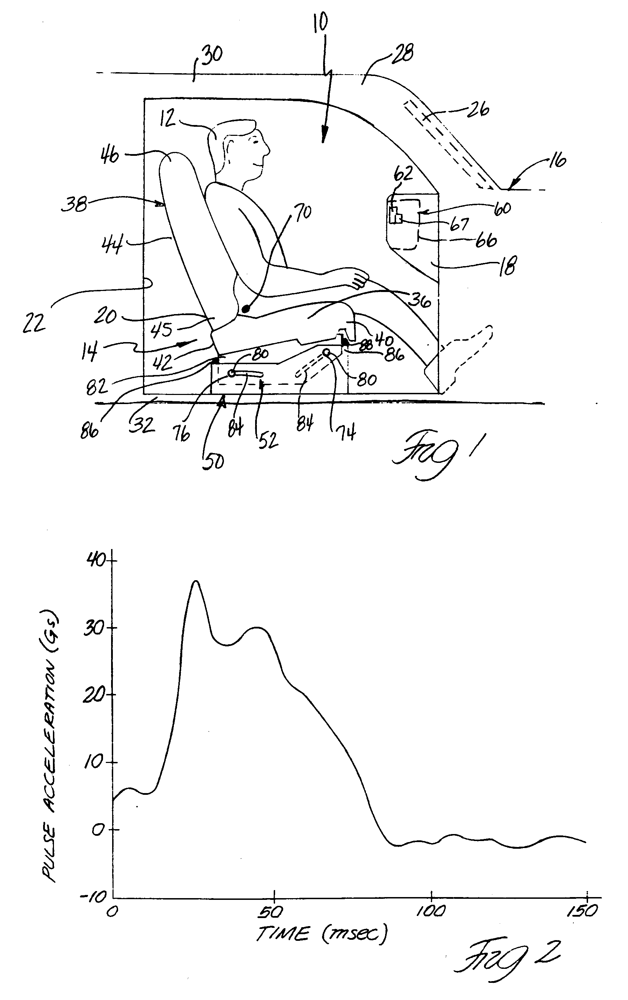

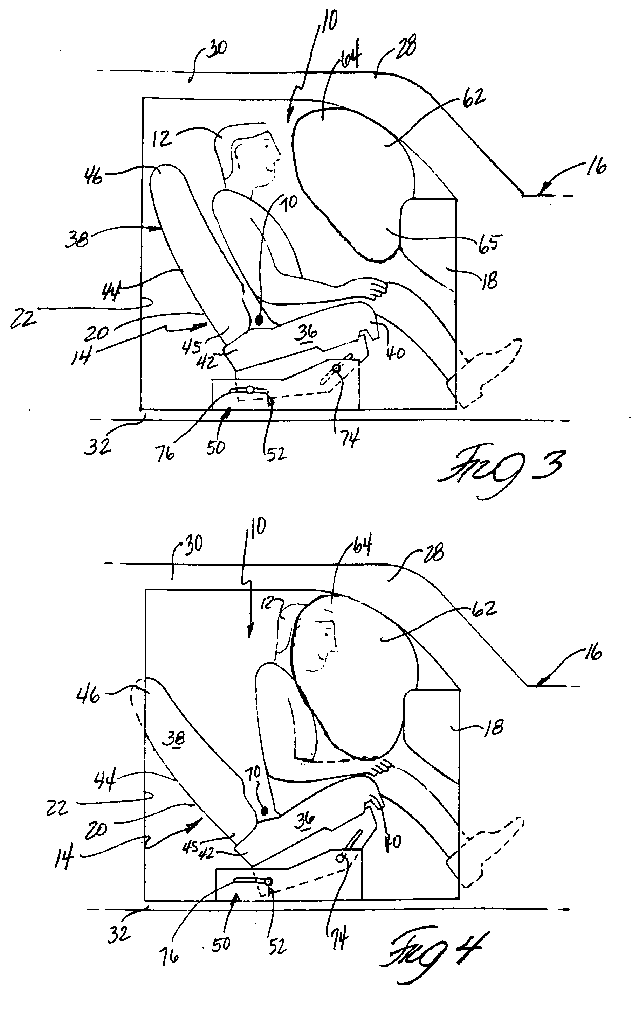

A vehicle restraint system 10 is generally illustrated in Figure 1. The vehicle restraint system 10 provides passive restraint of an occupant 12 in the vehicle seat assembly 14 of a vehicle 16 upon impact or collision of the vehicle 16. The impact may be a high deceleration occurring upon a front end collision.

A typical vehicle 16 includes an instrument panel 18 located in the front portion of the passenger compartment 22 as commonly known in the art. The vehicle 16 also typically includes a windshield 26 and a header 28 which is connected at the upper portion of the windshield 26 between the roof 30 of the vehicle and windshield 26. The header 28 provides structural support of the vehicle 16 with windshield 26. Structural reinforcement is also provided with the floor 32.

The system 10 includes a vehicle seat assembly 14 adapted to be connected to the floor 32 of the vehicle 16. The seat assembly 14 includes a seat member 20 for supporting an occupant 12. The seat member 20 generally includes a seating portion 36 and a seat back portion 38. The seating portion 36 includes a front end 40 closest to the instrument panel 18, and a rear end 42 connected adjacent the seat back portion 38. The seat back portion 38 includes a torso section 44 extending from a lower end 45 connected adjacent the seating portion 36, and a head rest section 46. The seat back portion 38 may be fixedly connected to the seating portion 36, or the seat back portion 38 may be fixed to the floor 32 and non-movable.

The seat assembly 14 also includes connecting means or apparatus 50 to movably connect the seat 20 to the vehicle 16 so that the seat 20 is fixed and nonmovable under normal operating conditions of the vehicle 16 and is movable during impact of the vehicle 16 to restrain the occupant 12 in the seat 20. The connecting means 50 includes seat control means 52 for moving the seat 20 in a forwardly direction with the inertia forces and toward the instrument panel 18 and rotating the seat member 14 to tilt the seat portion 26 so that the front end 40 of the seating portion 36 is above the rear end 42 in response to impact inertia. The connecting means 50 allows the seat assembly 14 to move in a forwardly direction while rotating upon high impact. This seat movement tends to capture the occupant 12 within the vehicle seat assembly 14 to minimize and substantially prevent submarining. Submarining occurs when the occupant 12 slides along the seat portion 36 below the steering wheel assembly 24 which commonly happens with a fixed and non-moveable seat.

The system 10 also includes a deployment means or assembly 60 adapted to be connected to the vehicle 16. The deployment means 60 includes a expanding means 62, typically an air bag or other expandable member, for deploying upon impact of the vehicle and toward the occupant to cushion and restrain the head of the occupant 12. The expanding means 62 includes a portion of volume 64 (Figures 3-4) expandable above the back portion 38 and torso portion 44 of the seat member 14 to prevent the occupant's head from contacting the header 28 of the vehicle 16 and reduces head and neck injuries from the momentum forces upon impact. The deployment assembly 60 also includes a mounting member 66 for mounting the expanding means 62 for deployment in a location forward of the occupant such that the greater of volume of expanding means 62 is above the torso section 44 of the seat back portion 38 to prevent the head of the occupant from rolling over the expanding means 62 and contacting the vehicle header 28 as the seat moves, or over-flexing the neck. The expanding means 62 includes a portion extending above the headrest 46 to provide a cushion at the header 28.

The expanding means 62 is generally comprised of an air bag which is deployable as those known in the art. However, the configuration of the air bag 62 is necessarily different from the prior art. The trajectory of the seat is designed to place the occupant at or below the contact position of the air bag 62 so that the upward force of the occupant caused by the seat 20 will be significantly absorbed by the air bag 62 and the occupant's torso and head will be completely enclosed in the air bag 62. If the trajectory moves the occupant too high, the occupant will ride up the air bag 62 then up into the header 28. Therefore, the subject air bag 62 is designed to shift the majority of the volume toward the head of the occupant to restrain the head so that the head of the occupant does not roll over the air bag 62 but is substantially restrained and aligned with the air bag 62.

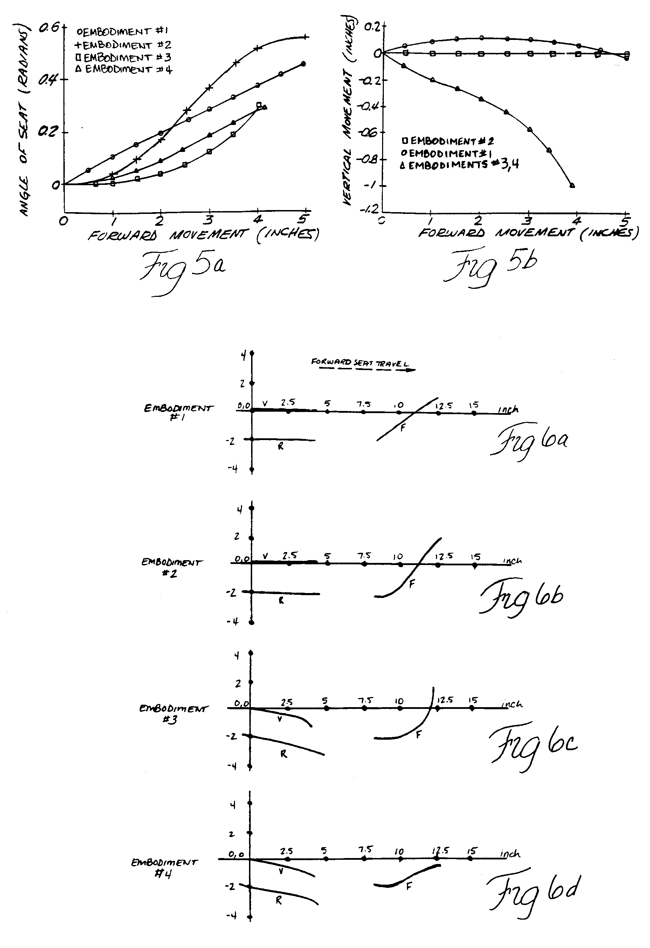

Such designs of the air bag are illustrated in Figures 4 and 7. In these Figures, the air bag 62 includes an enlarged volume section 64 which, when deployed, is positioned at or above the head of the occupant, the majority of the section 64 aligned with the head. A lower portion 65 of the air bag 62 is located in the chest area or torso of the occupant but the contact pressure is shared with the head. also, it is good to have some pressure on the chest and torso.

Figure 4 illustrates a fully deployed air bag 62 of a first embodiment. The enlarged volume section 64 is aligned with or above the headrest 46 and between the header 28 and occupant. The lower portion 65 is of a lesser volume located below the headrest 46.

Figure 7 illustrates a second embodiment of the air gab 62' and a third embodiment 62". The prior art, typical air bag which is used with a non-movable, fixed seat is also illustrated for comparison. The air bags 62', 62" are elongated with the enlarged volume 64 up near the head of the occupant. The air bag 62' is upwardly extended (with respect to prior art) along the same axis of the prior art. The air bag 62" is tilted to further move the enlarged volume 64 nearer to the header 28 between the occupant. These air bags 62', 62" protect and support the head and neck of occupant from "whipping" motion during impact, and from contact the header 28 when the seat moves during impact.

The deployment means 60 also includes means 67 for deploying the air bag 62. Such means is commonly known in the art. However, it is important that the air bag 62 be deployed earlier (approx. 1-3 g's) or at the same time that the seat is released and allowed to move, i.e., around 3 G's. The means 67 for deploying generally includes an inertia sensor for actuating deployment upon acceleration of a predetermined amount, i.e., 3g's, which is also commonly known in the art. The air bag 62 must be deployed and the seat must start movement at the same time or earlier. Also included would be a pressurized gas cylinder for inflating the air bag 62 in response to the sensor detection.

The combination of the seat control means 52 and the deployment means 60 interact to restrain the occupant within the vehicle seat 20 in a passive manner, i.e., without occupant actively placing restraint over its body. The seat control means 52 acts to hold the occupant in the seat 20 on the seating portion 36 during a collision.

The seat 20 is configured to move in a defined path to minimize injury to the occupant 12 based on characteristics of the vehicle 16, including the instrument panel 18 and header 28 positioning and spacing. The seat 20 provides lower body restraint by allowing the seat 20 to move so that the effect of the collision and deceleration is to hold the occupant in the seat 20. Angular rotation of the seat 20 also increases the frictional forces, as well as moving more of the seat cushion between the occupant and the instrument panel 18.

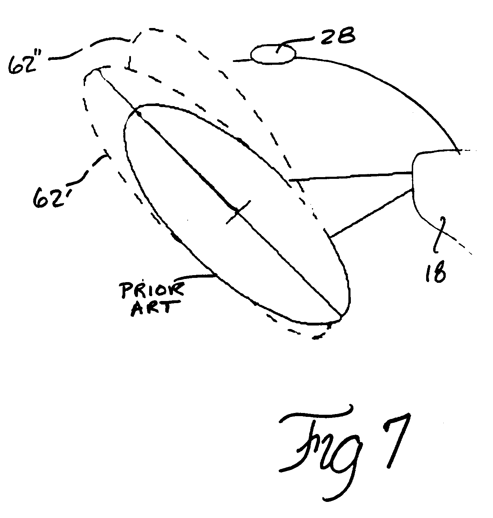

The seat control means 52 provides the controlled movement of the seat 20 which can be defined by the trajectory or path that a reference point 70 moves, and the travel of the rear and forward seat sides 42, 40. The reference point 70 follows a vertical travel trajectory and a rotational movement trajectory both with respect to forward seat travel as illustrated in Figures 5a-5b. The vertical travel trajectory is broadly defined as being substantially zero or in an increasing downward vertical direction preventing movement in the upward vertical direction (Figure 5b). The rotational movement trajectory is broadly defined as being increasing upwardly along a linear or concave path during substantially the initial half of horizontal seat travel (Figure 5a). The forces generated during a collision cause the seat 20 to slide forward and tilt back as it moves forward. The front seat side 40 of the seat 20 moves upwards, while the rear seat side 42 starts moving forward and may move downwardly. The vertical travel trajectory moves the reference point 70 less than 1.0 inch in the downward direction without movement in the upwardly vertical direction. The rotational movement component moves the reference point 70 with increasing change in angle in the upwardly vertical direction less than 0.6 radians and greater than 0.2 radians.

The central or reference point 70 is located in proximity to the hip pivot location or H-point of the seat near the lower back end 45 and the rear seat side 42 (see Figure 1). The reference point 70 may be the approximate center of gravity of the seat of the seat 16 thereof. Merely any point may be selected to determine the movement or trajectories of the seat 20 by the reference point 70. The reference point 70 is specifically defined in relation to the hinge point (center of hinge between the back portion and the seat portion) as 118mm toward the front of the car from the hinge point and 29.5mm above the hinge point.

The seat control means 52 controls the front seat side 40 to move a first vertical distance in generally the upward direction along a front path as the seat 20 travels forwardly, and the rear seat side 42 to move along a second vertical distance along a rear path which second vertical distance is less than the first vertical distance while preventing upward vertical movement of the rear seat side 42.

It is desirable to initially allow the seat 20 to follow a straight horizontal path, or slightly downward so that the seat 20 can gain momentum and subsequently be moved into the restraining rotated position. The seat 20 must be allowed to come up to speed without any force from the occupant (other than its weight). The seat 20 must move with the occupant during the initial movement, or it will not provide the required restraining effect. If it is attempted to restrain the occupant while the seat 20 is initially accelerating, the seat 20 will not act quickly enough and fall behind. With the trajectory having initial zero slope, the seat 20 will initially travel with the occupant. Once the seat 20 is up to speed, the seat 20 can begin to "capture" the occupant by changing the trajectory from straight. However, the seat 20 cannot drop too quickly or the occupant will lose contact with the seat 20 and the occupant will move too far ahead of the seat 20. The seat 20 and trajectory must always keep contact with the occupant's lower torso and upper legs.

Various embodiments of the paths or trajectories of the vertical travel and rotational movement of the reference point 70 may be utilized, as with the movement of the front 40 and rear 42 sides. Exemplary of such trajectories and movement paths are illustrated in Figures 5a-5b and 6a-6d. Embodiments #1 and #2 are related and are for use in the Chrysler B-van. Embodiment #2 is directed toward a theoretical trajectory of optimized cost function and embodiment #1 is an approximated trajectory based on embodiment #2 of a built model with cost and manufacture considerations.

The third and fourth embodiments #3 and #4 are related and are for use in the Chrysler S-van. Embodiment #4 is the optimized theoretical trajectory, and the embodiment #3 approximates the theoretical trajectory as a built model. These embodiments differ from the prior art and provide for optimized cost function values for specific vehicles as defined by the trajectories of the reference point 28 and movement of the rear and front seat ends 42, 40. Such trajectories are specifically disclosed in U.S. Patent Number _____ (pending), Serial Number 257,081, filed June 9, 1994.

To implement each of the trajectories of the various embodiments, the seat control means 52 includes a forward control assembly or means 74 connected adjacent the front seat side 40 and a rearward control assembly or means 76 connected adjacent the rear seat side 42 (See Figures 1, 3-4). The forward control assembly 74 is constructed to move the front seat side 26 the first vertical distance as it moves along a front path F. The rearward control assembly 76 is constructed to move the rear seat side 42 the second vertical distance as it moves along a rear path R with the second vertical distance less than the first vertical distance while preventing any upward vertical movement of the rear seat side 42. The four embodiments of front and rear paths are illustrated in Figures 6a-6d which implementation result in the vertical travel (V) and rotational movement trajectories of Figures 5a-5b. The forward control means 74 controls movement of the front seat side 40 to less than 4 inches in the upwardly vertical direction. The rearward control means 76 controls movement of the rear seat side 42 to less than 1 inch in the downwardly vertical direction.

The forward and rearward control assemblies 74, 76 generally comprise a pin or rollers 80 which extend outwardly from each seat side 40, 42 at the seat frame 82 and engage in slots 84 constructed in the support frame 86 to control movement along the front and rear paths. Figures 1, 3-4 and 6a illustrate this structure implementing embodiment #1. Figures 6b-6d illustrate the path of movement on the front and rear pins 80 of the seat 14 of the remaining embodiments #2-4. One outward side of the seat 14 is illustrated with the other side being identical. Alternatively, a pivotal link may be utilized to rotate the seat in an arcuate path, as set forth in the referenced copending application. It is to be understood that any type of control assembly may be utilized, though simplistic implementations are illustrated herein. It is within the scope of the invention that one skilled in the art will understand that different types of components and links may be utilized in place of those shown to follow the trajectories or movement herein disclosed.

Figures 1, 3-4 and 5a-5b, and 6a illustrate the first embodiment #1 of the assembly 10. In regard to the trajectories of the reference point 70 (coordinates 0,0 in the Figures), the vertical movement trajectory as the seat travels forwardly is substantially horizontal (zero) with the slight vertical change during the middle of forward movement. The vertical travel trajectory (z) begins and ends at relative zero at the beginning and end forward movement with a slight vertical curve providing vertical movement of approximately 0.1 inches (Figure 5b). The rotational movement trajectory (θ) is generally defined by a straight, linearly increasing trajectory starting at relative 0 and changing 0.4 radians over the approximate five inches of forward travel (Figure 5a). The forward control assembly 74 moves the front side 40 of the seat 14 in a upwardly angled, straight path starting at (x=forward travel, z=vertical travel) (8, -2) and ending at (12.5, 2). The rearward control assembly 76 moves the rear side 42 of the seat 14 along a straight horizontal path of zero vertical change starting at (-1, -2) and ending at (-4, -2). This embodiment #1 represents the built assembly for the B-van which approximated the theoretical trajectory of embodiment #2. The built trajectory was modified from theoretical to:

$$x = 0 \rightarrow 5 \text{ inches}$$

$$\theta(x) = 0.11171x - 0.00921x^2 + 0.00235x^3 - 0.000472479x^4 + 0.0000399686x^5$$

$$z(x) = 0.10123x - 0.02107x^2 - 0.00474x^3 + +0.00191x^4 - 0.000196444x^5$$

Embodiment #2 represents the theoretical trajectories upon which embodiment #1 was based. The rotational movement trajectory (θ) is generally in an upwardly extending S-curve moving from an initial relative 0 angle to 0.6 radians at 5 inches forward travel (x). The vertical travel trajectory (z) is substantially horizontal, i.e., zero vertical change as illustrated in Figure 5b. The forward control assembly 74 provides a generally concave initial path (with respect to the seat) with slight, relatively flat, S-curve characteristics at the end of travel (almost linear) and with small slope at the initial portion of travel and starting and ending at the same approximate points as in embodiment #1. The rearward control assembly 76 is in a horizontal straight path of zero vertical change the same as embodiment #1. The theoretical trajectory is specifically identified as follows for the reference point:

$$x = 0 \rightarrow 5 \text{ inches}$$

$$\theta = -0.00567x + 0.02787x^2 + 0.02355x^3 - 0.008137x^4 + 0.000648x^5$$

$$z(x) = 0.0$$

In the third embodiment #3, the rotational movement trajectory (θ) is in a generally upwardly concave path in the initial two inches of travel to a linear upwardly angled path in the remainder of forward travel to 0.2 radians. The vertical movement trajectory is in a downwardly linear portion extending to a downward convex path (with respect to the seat 20) as illustrated in Figures 5a-5b extending from zero to approximately one inch. The forward control assembly 74 moves the front side 40 along a substantially linear path with a slight upward concave curvature (from seat view) at the initial portion of travel from approximately (8, -2) to (10, -2) and then concavity with respect to the seat 16 from (10, -2) to (12.5, 1.5). The forward control assembly 50 may move the front seat side 40 along an upwardly arcuate path by a pivoting link. The rearward control assembly 76 moves the rear side 42 along a substantially downwardly angled linear path of slight convex curvature (with respect to seat) from (-1, -2) to (4.5, -3).

The built trajectory was modified from theoretical to:

$$x = 0 \rightarrow 4 \text{ inches}$$

$$\theta(x) = 0.0247x - 0.020395x^2 + 0.010055x^3 - 0.00052x^4$$

$$z(x) = 0.2482x - 0.08316x^2 + 0.02093x^3 + 0.000237x^4$$

In the fourth embodiment #4, the vertical travel trajectory (z) of the seat 16 is same as in the third embodiment #3. The rotational movement trajectory ($\theta$) is in a slight upwardly concave portion over the first two inches of forward travel and linearly sloping upwardly for the remaining of the trajectory up to approximately 0.6 radius. The forward control assembly 74 moves the front seat side 40 along a flattened S-curve having initial flat travel to an increasing angle from (8, -2) to (12.5, -0.5). The rearward control assembly 76 moves the rear seat side 42 along a generally downwardly sloping linear path with slight convexity at the latter end of travel, moving from (1, -2) to (4, -3).

The theoretical trajectory is specifically defined as follows:

$$x = 0 \rightarrow 4 \text{ inches}$$

$$\theta(x) = -0.04257x + 0.07226x^2 - 0.01779x^3 + 0.00206x^4 - 0.00009088x^5$$

$$z(x) = 0.2482x - 0.08316x^2 + 0.02093x^3 + 0.000237x^4$$

The assembly 10 may also include additional features as commonly known in the art, such as a dampener mechanism added between the seat frame and the vehicle to control and dampen the motion of the seat, i.e., slow the seat to a gradual stop at the end of its trajectory. The dampener minimizes the forward motion occurring from an abrupt stop when the end of the trajectory is reached.

Furthermore, an initial latch mechanism 86 may be provided to maintain the seat in its initial, fixed location until a vehicle collision impact occurs causing predetermined inertia forces. In general, the initial latch mechanism 86 releases at approximately 3G's to allow the seat 20 to move with the occupant. As will be appreciated by those skilled in the art, the large inertial forces acting on the seat during a frontal impact results in high torque causing large vertical reaction forces at the rear seat supports. The latching mechanism 86, such as retaining leaf spring, is provided to maintain the seat in its initial position during events other than high forward deceleration. Upon the occurrence of the preselected threshold deceleration rate, the latching mechanism 86 will release to allow the seat to move along its path.

It is also preferred that a latch mechanism 88 be provided to keep the seat in its fully traveled or forward position following a collision. It is desirable to have the final latch 88 hold the seat 20 in its fully traveled position through the peak of the crash pulse and slightly after the peak, usually until the occupant has had initial contact with the instrument panel.

The air bag 62 and seat 20 work together to provide an optimal passive restraint system. The seat 20 moves at the same time or after the air bag 62 is deployed. The seat 20 holds the occupant in the seating portion 36 while the air bag 62 protects the head of the occupant from hitting the header and the upper body from too much movement.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

## Claims

1. A vehicle restraint system for restraining an occupant of a vehicle in a seat upon high deceleration of the vehicle, said system comprising:

    a seat assembly (14) adapted to be connected to a vehicle, said seat assembly (14) including a seat member (20) having a back portion (38) extending in an upward direction and a seating portion (36) adjacent said back portion (38) extending in a forward horizontal direction and including connecting means (50) for movably connecting said seat member (20) to the vehicle (16) to maintain said seat member (20) fixed to said vehicle (16) under normal operating conditions and to allow said seat member (20) to move in a forward direction while tilting said seating

6

portion (36) to a predetermined tilt position during high deceleration to restrain the occupant in said seat member (20); and

a deployment assembly (60) adapted to be connected to the vehicle (16) forward of said seat member (20), said deployment assembly (60) including expanding means (62) for expanding upon deceleration of the vehicle (16) toward said seat member (20) while said seating portion (36) is moving to protect and said predetermined tilt position to restrain the head of the occupant.

2.  A system as set forth in claim 1 further characterized by said expanding means (62) including a portion (64) expandable above the back portion (38) of the seat member (20) to restrain the head of the occupant and to prevent the head from contacting the header of the vehicle.

3.  An assembly as set forth in claim 2 further characterized by a reference point (70) defined on said seat member (20) located in proximity to a lower back end (45) of said back portion (38) and a rear seat end of said seating portion (36), and said connecting means (50) including seat control means (52) connected to said seat member (20) for controlling movement of said seat member (20) with respect to the vehicle upon high deceleration defined by said reference point (70) following a vertical travel trajectory with respect to horizontal seat travel as being substantially zero or in a downward direction preventing movement in the upwardly direction and having a rotational movement trajectory with respect to horizontal seat travel as being linear or concave extending in the upwardly vertical direction during substantially the initial half of horizontal seat travel, and defined by moving a front seat side a vertical distance along a front path and moving a rear seat side a second vertical distance along a rear path less than said first vertical distance while preventing upward vertical movement of said rear seat side.

4.  An assembly as set forth in claim 3 further characterized by said seat control means (52) including forward control means (74) connected adjacent said front seat side (40) of said seat member (20) for moving said front seat side (40) in an curving, concave path in the upwardly vertical direction.

5.  An assembly as set forth in claim 4 further characterized by said seat control means (52) including rearward control means (76) connected adjacent said rear seat side (42) of said seat member (20) for moving said rear seat side (42) of said seat member (20) in an angular direction in the downward direction.

6.  An assembly as set forth in claim 3 further characterized by said seat control means (52) including forward control means (74) connected adjacent said front seat side (40) of said seat member (20) for moving said front seat side (40) in an angled direction in the upwardly vertical direction.

7.  An assembly as set forth in claim 6 further characterized by said seat control means (52) including rearward control means (76) connected adjacent said rear seat side (42) of said seat member (20) for moving said rear seat side (42) in a straight horizontal direction.

8.  An assembly as set forth in claim 5 further characterized by said forward control means (74) and said rearward control means (76) moving said seating portion (36) with said vertical movement trajectory being angled in the downwardly direction in a substantially arcuate, concave path of increasing slope, and said rotational movement trajectory being angled in the upwardly direction.

9.  An assembly as set forth in claim 7 further characterized by said forward control means (74) and said rearward control means (76) moving said seating portion (36) and said reference point (70) with said vertical movement component being in substantially a horizontal path, and said rotational movement component being angled in the upwardly.

10. A method of restraining an occupant in a vehicle seat (20) upon impact of a vehicle, the seat including a back portion (38) extending in a substantially upwardly vertical direction from a lower back end (45), and a seating portion (36) extending in a substantially horizontal direction from a rear seat side (42) connected adjacent the lower back end (45) of the back portion (38) and a front seat side (40) opposing the rear seat side (42), the method including the steps of:

detecting a predefined inertia force on the seat (20) representative of the impact,

moving the seat (20) in response to the predefined inertia in the forward direction with the inertia force and pivoting the seat to raise the front seat side (40) above the rear seat side (42);

deploying an expandable member (62) in front of the seat (20) with a portion above the back portion (38) of the seat (20) to restrain the head of the occupant and prevent the head from contacting the header of the vehicle.

**11.** A method as set forth in claim 10 further including moving the seat so that the reference point follows a vertical trajectory and a rotational trajectory, the vertical trajectory defined by the reference point moving a vertical distance as the seat travels forwardly as zero or in the downward vertical direction preventing movement in the upwardly direction, and the rotational trajectory defined by the reference point rotating the seat as the seat travels forwardly by increasing linear or concave path representing change in angle of the seat.

**12.** A method as set forth in claim 10 further including moving the front seat side a first vertical distance along a front path and moving said rear seat side a second vertical distance along a rear path less than said first vertical distance while preventing upward vertical movement of said rear seat side.

**13.** A method as set forth in claim 10 further including deploying an air bag to protect the head of the occupant.

*Fig 1*

*Fig 2*

Fig 3

Fig 4

Fig 5a

Fig 5b

Fig 6a

Fig 6b

Fig 6c

Fig 6d

62"

28

62'

18

PRIOR
ART

Fig 7